# EUROPÄISCHE PATENTSCHRIFT

(11) **EP 3 461 325 B1**
(45) Veröffentlichungstag und Bekanntmachung des Hinweises auf die Patenterteilung: **30.03.2022**
(21) Anmeldenummer: 18190635.5
(22) Anmeldetag: 24.08.2018
(51) Int. Cl.: A01F 15/18, A01B 29/02

(54) **WALZE FÜR EINE LANDWIRTSCHAFTLICHE BALLENPRESSE**
ROLLER FOR AN AGRICULTURAL BALER
ROULEAU POUR UNE PRESSE À BALLES AGRICOLE

(30) Priorität: 27.09.2017 DE 102017122411
(43) Veröffentlichungstag der Anmeldung: 03.04.2019
(73) Patentinhaber: Usines CLAAS France S.A.S, 57140 St. Rémy / Woippy (FR)
(72) Erfinder: Ising, Mario, 49124 Georgsmarienhütte (DE); Rongvaux, Laurent, 54800 Tronville (FR); Waechter, Julien, 57070 Saint- Julien- Ies- Metz (FR); Siekmann, Ingolf, 32257 Bünde (DE)
(74) Vertreter: CLAAS Gruppe

(56) Entgegenhaltungen:
- EP-A1- 1 834 518
- EP-A1- 1 927 279
- EP-A1- 3 085 222
- CN-A- 106 134 640
- US-A- 2 572 276
- US-A- 5 752 437

## Beschreibung

Die Erfindung betrifft eine Walze für eine landwirtschaftliche Arbeitsmaschine gemäß dem Oberbegriff des Anspruchs 1.

In landwirtschaftlichen Arbeitsmaschinen kommen eine Vielzahl an Walzen zum Einsatz, beispielsweise als Presswalzen bei Ballenpressen, als Umlenkwalzen oder als Förderwalzen. Landwirtschaftlichen Ballenpressen, insbesondere Rundballenpressen, sind mit einer Vielzahl von Walzen ausgestattet, die jeweils um eine Drehachse gegenüber dem Gehäuse der Presse drehbar gelagert sind. Je nach Bauart der Ballenpresse sind die Walzen umfänglich oder teilumfänglich um die Presskammer herum angeordnet, um die Presskammer an deren Umfang vollständig oder teilweise zu begrenzen.

Eine Hauptfunktion dieser Walzen besteht darin, Presskräfte auf das Pressgut aufzubringen, um dieses in der Presskammer zu einem Rundballen zu verdichten. Auf die einzelnen Walzen wirken dabei teils sehr hohe Kräfte. Die im unteren Bereich der Presskammer angeordneten Walzen werden besonders hoch beansprucht, da diese zusätzlich zur Belastung durch Presskräfte auch das Eigengewicht der Ballen zu tragen haben. Dies erfordert eine entsprechend robuste Ausführung der Walzen. Darüber hinaus kommt den Walzen eine Förderfunktion des Erntegutes zu, weshalb diese drehbar am Pressengehäuse gelagert sind und entweder aktiv angetrieben werden oder zumindest eine passive Förderung übernehmen. Zur Gewährleistung einer guten Förderwirkung sind die Walzenoberflächen daher zumeist mit einer Profilierung versehen, die darüber hinaus auch zu einer gezielten Bearbeitung des Pressguts beitragen kann.

Bei aus dem Stand der Technik bekannten Walzen wird die Umfangsfläche der Walzen aus geschweißten Blechstück zusammengefügt, wodurch zwar robuste Walzen gefertigt werden können, die jedoch auch ein hohes Eigengewicht aufweisen. Aus der EP 2 537 407 B1 sind bereits gewichtsreduzierte Walzen für landwirtschaftliche Ballenpressen bekannt. Hierbei wird eine Walze jeweils aus zwei Halbschalen gebildet, welche mittels nach innen gerichteten Kontaktflächen verbunden werden. Die Fertigung dieser speziellen Halbschalen erhöht jedoch den Fertigungsaufwand.

Aus der EP 1 834 518 A1 sind Pressrollen bekannt geworden, die aus rohrförmigem Material hergestellt sind, wobei die Versteifungsprofilierung in einem separaten Arbeitsgang in das rohrförmige Ausgangsmaterial eingebracht werden müssen, was zumindest den Fertigungsaufwand erhöht.

Es ist daher eine Aufgabe der vorliegenden Erfindung, eine Walze für eine landwirtschaftliche Arbeitsmaschine, besondere eine Ballenpresse, bereitzustellen, welche bei vergleichbarer Festigkeit ein verringertes Gewicht und einen reduzierten Herstellaufwand aufweist.

Die Aufgabe wird gelöst durch eine Walze mit den Merkmalen des Anspruchs 1. Demnach zeichnet sich eine Walze für eine landwirtschaftliche Arbeitsmaschine, insbesondere eine Ballenpresse, mit einem im Wesentlichen zylindrisch ausgebildeten Walzenkörper, welcher um eine Drehachse drehbar, insbesondere in einem Gehäuse der Arbeitsmaschine, gelagert ist, dadurch aus, dass der Walzenkörper einstückig und nahtfrei ausgebildet ist. Innenseitig kann der Walzenkörper entlang der Drehachse einen gleichförmigen, konstanten Querschnitt aufweisen. Der Walzenkörper kann dabei entlang der Drehachse absatzfrei ausgebildet sein. Durch dieses geschlossene, nahtfreie Profil des Walzenkörpers kann der Fertigungs- und Herstellaufwand gesenkt werden und aufgrund der nahtfreien Ausgestaltung das Gewicht verringert werden, da beispielsweise keine Überlappungen für Schweißnähte oder sonstige Verbindungen einzelner Walzenkörperteile vorzuhalten sind. Durch fehlende Nähte in dem Walzenkörper kann auch dessen Festigkeit erhöht werden, da somit Fehlstellen, an denen es zu Spannungsspitzen innerhalb des Walzenkörpers kommen kann, entfallen.

Bevorzugt weist der Walzenkörper nach radial außen mindestens eine Profilierung auf. Die Profilierung kann dabei entlang der Drehachse des Walzenkörpers ausgebildet sein. Im Bereich der Profilierung kann eine Wandstärke des Walzenkörpers gleich oder größer sein als in einem unprofilierten Bereich des Walzenkörpers. Die Profilierung ermöglicht ein verbessertes Zusammenwirken mit dem Erntegut, beispielsweise bei der Förderung des Erntegutes, und kann eine Erhöhung der Festigkeit des Walzenkörpers beitragen. Weiterhin vorzugsweise weist der Walzenkörper radial innenseitig mindestens eine Verstärkung auf, welche insbesondere entlang der Drehachse ausgebildet ist. Durch die innenliegende Verstärkung kann die Festigkeit der Walze und insbesondere des Walzenkörpers weiter erhöht werden.

In einer bevorzugten Ausgestaltung der Walze ist die Profilierung und/oder Verstärkung einstückig, insbesondere nahtfrei, an dem Walzenkörper ausgebildet und/oder, zumindest teilweise, lösbar mit dem Walzenkörper verbunden. Durch eine einstückige Ausbildung der Profilierung und/oder Verstärkung mit dem Walzenkörper kann eine zuverlässige, gewichtsparende Verstärkung des Walzenkörpers ermöglicht werden. Eine zumindest teilweise lösbare Verbindung der Profilierung und/oder der Verstärkung mit dem Walzenkörper hat den Vorteil, dass die Profilierung und/oder Verstärkung beispielsweise an das zu verarbeitende Erntegut angepasst werden können oder bei Verschleiß auswechselbar sind.

In einer bevorzugten Weiterbildung ist die Verstärkung jeweils in Form einer Strebe und/oder eines Profils, insbesondere eines T-Profils, ausgebildet. Die Verstärkung in Form einer Strebe kann beispielsweise in Form einer Verstärkungsrippe ausgebildet sein, welche sich entlang der Drehachse und im Wesentlichen parallel zu dieser erstreckt. Eine Verstärkung in Form eines Profils, insbesondere T-Profils, kann einen T-förmigen oder anderweitigen Querschnitt mit einem gegenüber der Strebe erhöhten Flächenträgheitsmoment aufweisen. Durch die innenliegende Verstärkung kann die Festigkeit der Walze und insbesondere des Walzenkörpers weiter erhöht werden.

Gemäß einer bevorzugten Weiterbildung der Erfindung ist jeweils endseitig an dem Walzenkörper eine Scheibe zur drehbaren Lagerung der Walze vorgesehen. Die Scheibe kann dabei jeweils innenliegend in dem Walzenkörper, mit dessen Rand bündig oder in axialer Richtung beabstandet, angeordnet sein. Die Scheibe kann dabei jeweils formschlüssig mit der Profilierung und/oder der Verstärkung verbunden sein. Dies bietet den Vorteil einer verbesserten Kraftübertragung zwischen Scheibe und Walzenkörper beispielsweise beim Drehen und Pressen eines Erntegutballens.

An den Scheiben ist vorteilhafterweise jeweils ein Flansch mit einem Lagerzapfen und/oder einer Lagerwelle zur drehbaren Lagerung der Walze angeordnet. Eine Lagerwelle kann dabei auch durch beide endseitigen Flansche gehen. Der Flansch kann lösbar, beispielsweise mittels Schrauben, oder fest mit der jeweiligen Scheibe verbunden sein. Durch diesen Aufbau können unterschiedliche Werkstoffe für die Scheibe und beispielsweise den Lagerzapfen, die Lagerwelle und/oder den Flansch verwendet werden, wodurch die Verschleißfestigkeit der Lagerung erhöht werden kann. Innerhalb des Walzenkörpers ist in einer besonders bevorzugten Ausgestaltung mindestens ein Kernelement zur Verstärkung des Walzenkörpers angeordnet. Das mindestens eine Kernelement kann stoffschlüssig, kraftschlüssig und/oder formschlüssig mit dem Walzenkörper verbunden sein. Denkbar ist auch eine beabstandete oder aneinander angrenzende Anordnung eines oder mehrerer Kernelemente auf der Lagerwelle. Die Kernelemente ermöglichen eine weitere Erhöhung der Festigkeit des Walzenkörpers.

Gemäß einer vorteilhaften Weiterbildung der Erfindung sind die Profilierung und/oder die Verstärkung durch Strangpressen hergestellt. Besonders vorteilhafterweise sind die Profilierung und/oder die Verstärkung aus einem stranggussfähigen Metall, beispielsweise Aluminium oder einer Aluminiumlegierung, hergestellt. Die Profilierung und/oder die Verstärkung können dabei aus einem stranggussfähigen Metall, beispielsweise Aluminium oder einer Aluminiumlegierung, hergestellt sein. Die Scheiben können ebenfalls aus Aluminium oder einem von Aluminium verschiedenen Werkstoff ausgebildet sein. Das Stranggießen bietet den Vorteil, dass der Walzenkörper, die Profilierung und/oder die Verstärkung nahtlos, einstückig hergestellt werden können, wodurch eine hohe Festigkeit bei niedrigem Gewicht erreicht werden kann. Zudem bietet das Stranggießen den Vorteil, dass die innenliegenden Verstärkungen ohne großen zusätzlichen Fertigungsaufwand mit hergestellt werden können.

Weiterhin betrifft die Erfindung eine landwirtschaftliche Arbeitsmaschine, insbesondere Ballenpresse, mit mindestens einer, nach einem der vorigen Ansprüche ausgebildeten Walze. Eine landwirtschaftliche Arbeitsmaschine kann dabei eine Ballenpresse für Erntegut, insbesondere eine Rundballenpresse, ein Mähdrescher, ein Feldhäcksler oder ein Ladewagen sein, wobei die Walze in Form einer Presswalze, einer Umlenkwalze, einer Einzugs- oder Förderwalze ausgebildet sein kann.

Die Erfindung wird im Folgenden unter Bezug auf die beigefügten Figuren näher erläutert. Daraus ergeben sich auch weitere Einzelheiten und Vorteile der Erfindung.

Es zeigen:
- Fig. 1: eine schematische Seitenansicht einer landwirtschaftlichen Rundballenpresse;
- Fig. 2: eine schematische Schnittansicht eines ersten Walzenquerschnittes mit einer Profilierung;
- Fig. 3: eine schematische Schnittansicht eines zweiten Walzenquerschnittes mit innenliegenden Verstärkungen;
- Fig. 4: eine perspektivische Ansicht einer Walze gemäß einem weiteren Ausführungsbespiel mit einer innenliegenden, zweiten Verstärkung; und
- Fig. 5: eine perspektivische Ansicht einer Walze mit endseitig an dem Walzenkörper angeordneten Scheiben mit Lagerzapfen zur drehbaren Lagerung der Walze.

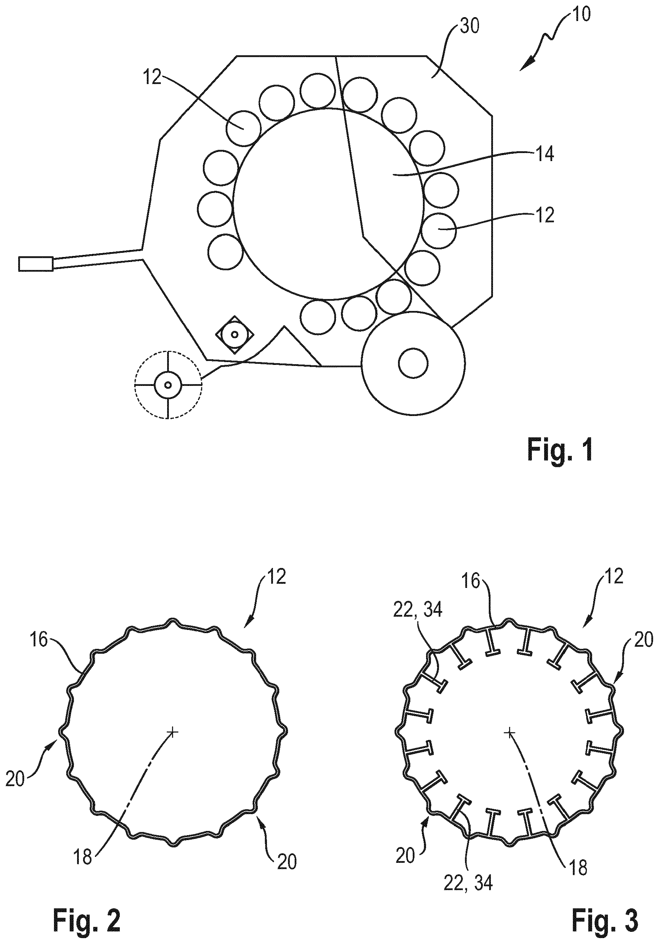

In Fig. 1 ist eine landwirtschaftliche Arbeitsmaschine in Form einer Rundballenpresse 10 dargestellt. Die Ballenpresse 10 wird zur Aufnahme von Pflanzengut, beispielsweise von einem Traktor (nicht dargestellt) über ein Feld gezogen, wobei das Pflanzengut mittels einer Aufsammeleinrichtung, einer sogenannten Pick-up, aufgenommen, von einer Schneideinrichtung zerkleinert und einer Presskammer 14 zugeführt wird. Die Presskammer 14 weist eine im Wesentliche zylindrische Form auf und wird durch eine Vielzahl von Walzen 12 gebildet. Die Walzen 12 sind dabei drehbar gegenüber einem Gehäuse 30 der Ballenpresse 10 gelagert. Die Walzen 12 dienen als Pressmittel für das in die Presskammer 14 eintretende Pflanzengut. Bei den schematisch dargestellten Walzen 12 handelt es sich um erfindungsgemäße, nachfolgend anhand der Fig. 2 bis 5 näher beschriebene Walzen 12.

Die in Figur 1 dargestellte Ballenpresse ist eine sogenannte Festkammerpresse, welche ausschließlich Walzen 12 als Pressmittel aufweist, wobei die Walzen 12 im Wesentlichen ortsfest angeordnet sind und der Durchmesser der Presskammer 14 unveränderbar ist. Davon abweichend kann bei anderer Bauart einer Ballenpresse eine andere Anzahl von erfindungsgemäßen Walzen 12 bzw. eine andere Anordnung der Walzen 12 zum Einsatz kommen. Eine Kombination von Walzen 12 mit anderen Pressmitteln, beispielsweise umlaufenden Riemen, ist ebenso denkbar. Darüber hinaus können erfindungsgemäß ausgebildete Walzen 12 auch in anderen landwirtschaftlichen Arbeitsmaschinen wie Mähdreschern, Feldhäckslern, einer Pick-up für Ladewagen oder Pressen, eingesetzt werden.

In Figur 2 ist ein Querschnitt durch eine erfindungsgemäße Walze 12 dargestellt. Die Walze 12 weist einen Walzenkörper 16 auf, welcher sich entlang einer Drehachse 18 der Walze 12 erstreckt. Der Walzenkörper 16 weist einen nahtlosen, einstückig ausgebildeten Querschnitt auf, wobei durch das homogene Material eine hohe Festigkeit erreicht werden kann. Der Querschnitt des Walzenkörpers 16 ist innenseitig in axialer Richtung entlang der Drehachse 18 unverändert, insbesondere absatzfrei. An dem Walzenkörper 16 sind nach radial außen weisende Profilierungen 20 ausgebildet, welche beispielsweise eine verbesserte Förderung der Pflanzengutes bewirken können. Im Bereich der Profilierungen 20 weist der Walzenkörper 16 die gleiche Wandstärke auf wie in den unprofilierten Bereichen zwischen den Profilierungen 20. Hierdurch weist der Walzenkörper 16 innenseitig im Bereich der Profilierungen 20 jeweils eine sich in axialer Richtung erstreckende Vertiefung auf. Denkbar ist auch eine Erhöhung der Wandstärke im Bereich der Profilierung 20. Durch die Profilierung 20 kann das Flächenträgheitsmoment des Walzenkörpers 16 erhöht und somit auch die Festigkeit gegen Durchbiegen verbessert werden, wodurch das Pressen des Pflanzengutballens verbessert werden kann.

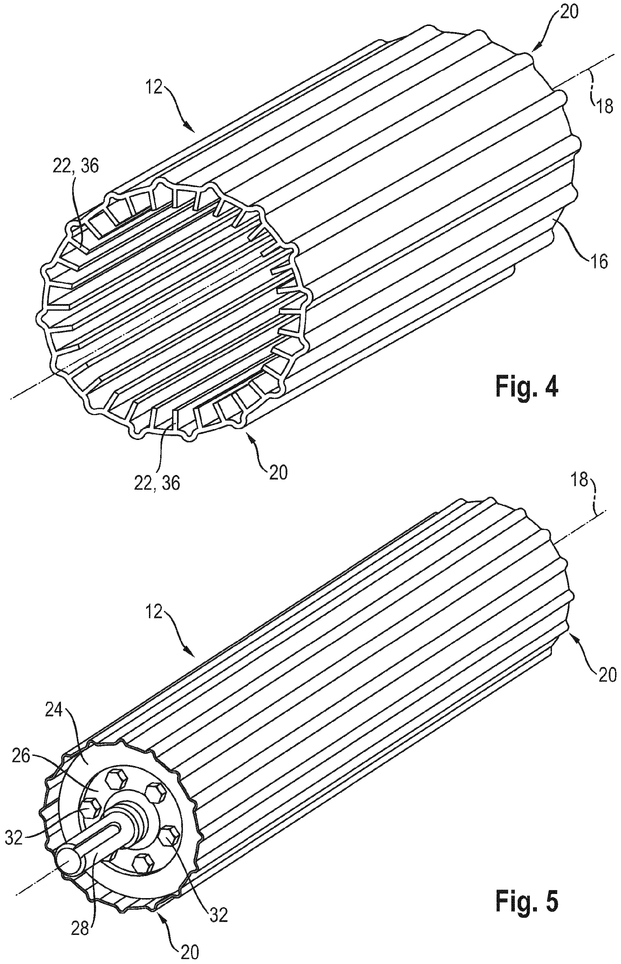

Eine weitere Erhöhung der Festigkeit des Walze 12 kann durch die in Figur 3 dargestellte innenseitige Anordnung von Verstärkungen 22 erreicht werden. Die Verstärkungen 22 sind dabei jeweils innenseitig zwischen außenseitigen Profilierungen 20 angeordnet und erhöhen so weiter die Festigkeit der Walze 12 gegen durchbiegen. Die in Figur 3 dargestellten Verstärkungen 22 sind in Form eines Profils 34 ausgebildet, wobei das Profil eine T-Form aufweist. Die Verstärkungen 22 können auch in einer einfacheren geometrischen Form als Strebe 36, beispielsweise einer Verstärkungsrippe, innenseitig des Walzenkörpers 16 angeordnet sein. In Figur 4 sind jeweils zwei Streben 36 als Verstärkungen 22 in den unprofilierten Bereichen jeweils zwischen den außen angeordneten Profilierungen 20 angeordnet.

Die Profilierungen 20 und/oder Verstärkungen 22, 34, 36 sind dabei einstückig und nahtfrei mit dem Walzenmantel 16 ausgebildet. Dies kann durch Strangpressen erfolgen, wodurch auch die innenliegenden Verstärkungen 22, 34, 36 kostengünstig herstellbar sind. Die dargestellten Walzen 12 sind dabei aus strangpressbarem Aluminium oder einer Aluminiumlegierung, hergestellt. Zur drehbaren Lagerung der Walzen 12 in dem Gehäuse 30 der Ballenpresse 10 sind jeweils endseitig an dem Walzenkörper 16 Scheiben 24 vorgesehen, welche innerhalb des Walzenkörpers 16 angeordnet sind. Diese Scheiben 24 können aus dem Material des Walzenkörpers 16 oder einem von diesem verschiedenen Material bestehen. Die Scheiben 24 können stoffschlüssig, formschlüssig und/oder kraftschlüssig mit dem Walzenkörper 16 verbunden sein. Die dargestellten Scheiben 24 sind innerhalb und zu den Enden des Walzenkörpers 16 beabstandet angeordnet, so dass ein Flansch 26 mit den Scheiben 24 verbunden werden kann, ohne mit dem Gehäuse 30 der Ballenpresse 10 zu kollidieren. Ein Flansch 26 ist jeweils mittels Schrauben 32 lösbar an einer Scheibe 24 befestigt. Mit dem Flansch 26 ist ein Lagerzapfen 28 verbunden, über den die Walze 12 drehbar in dem Gehäuse 30 gelagert werden kann. Der Lagerzapfen 28 weist zur Aufnahme beispielsweise Ritzels und zur Drehmomentübertragung beim Pressen eines Ballens und/oder Förderung des Pflanzengutes koaxial eine Nut auf.

Eine aus Aluminium stranggepresste Walze 12 weist bei geringem Gewicht aufgrund der Gestaltung des Walzenkörpers mit Profilierungen 20 und/oder Verstärkungen 22, 34, 36 eine hohe Festigkeit auf, so dass im Ergebnis eine Walze geschaffen ist, die bei gegenüber herkömmlicher Bauweise verringertem Gewicht eine hohe Festigkeit und einen verringerten Herstellaufwand aufweist.

### Bezugszeichenliste

- 10: Ballenpresse
- 12: Walze
- 14: Presskammer
- 16: Walzenkörper
- 18: Drehachse
- 20: Profilierung
- 22: Verstärkung
- 24: Scheibe
- 26: Flansch
- 28: Lagerzapfen
- 30: Gehäuse
- 32: Schrauben
- 34: Profil
- 36: Strebe

## Patentansprüche

1. Walze für eine landwirtschaftliche Arbeitsmaschine, insbesondere eine Ballenpresse (10), mit einem im Wesentlichen zylindrisch ausgebildeten Walzenkörper (16), welcher um eine Drehachse (18) drehbar in einem Gehäuse (30) lagerbar ist, **dadurch gekennzeichnet, dass** der Walzenkörper (16) einstückig und nahtfrei ausgebildet ist und aus einem stranggussfähigen Aluminium oder einer stranggussfähigen Aluminiumlegierung durch Strangpressen hergestellt ist.

2. Walze nach Anspruch 1, **dadurch gekennzeichnet, dass** der Walzenkörper (16) nach radial außen mindestens eine Profilierung (20) aufweist.

3. Walze nach Anspruch 1 oder 2, **dadurch gekennzeichnet, dass** der Walzenkörper (16) radial innenseitig mindestens eine Verstärkung (22) aufweist, welche insbesondere entlang der Drehachse (18) ausgebildet ist.

4. Walze nach einem der vorigen Ansprüche, **dadurch gekennzeichnet, dass** die Profilierung (20) und/oder Verstärkung (22) einstückig, insbesondere nahtfrei, an dem Walzenkörper (16) ausgebildet und/oder, zumindest teilweise, lösbar mit dem Walzenkörper (16) verbunden ist.

5. Walze nach einem der vorigen Ansprüche, **dadurch gekennzeichnet, dass** die Verstärkung (22) jeweils in Form einer Strebe und/oder eines Profils, insbesondere eines T-Profils, ausgebildet ist.

6. Walze nach einem der vorigen Ansprüche, **dadurch gekennzeichnet, dass** jeweils endseitig an dem Walzenkörper (16) eine Scheibe (24) zur drehbaren Lagerung der Walze (10) vorgesehen ist.

7. Walze nach einem der vorigen Ansprüche, **dadurch gekennzeichnet, dass** an den Scheiben (24) jeweils ein Flansch (26) mit einem Lagerzapfen (28) und/oder einer Lagerwelle zur drehbaren Lagerung der Walze (10) angeordnet ist.

8. Walze nach einem der vorigen Ansprüche, **dadurch gekennzeichnet, dass** innerhalb des Walzenkörpers (16) mindestens ein Kernelement zur Verstärkung des Walzenkörpers (16) angeordnet ist.

9. Walze nach einem der vorigen Ansprüche, **dadurch gekennzeichnet, dass** die Profilierung (20) und/oder die Verstärkung (22) durch Strangpressen hergestellt sind.

10. Walze nach einem der vorigen Ansprüche, **dadurch gekennzeichnet, dass** die Profilierung (20) und/oder die Verstärkung (22) aus einem stranggussfähigen Metall, beispielsweise Aluminium oder einer Aluminiumlegierung, hergestellt sind.

11. Landwirtschaftliche Arbeitsmaschine, insbesondere Ballenpresse (10), mit mindestens einer nach einem der vorigen Ansprüche ausgebildeten Walze (12).

## Claims

1. A roller for an agricultural working machine, in particular a roll baler (10), with a substantially cylindrically configured roller body (16) which can be rotatably mounted about an axis of rotation (18) in a housing (30),
**characterized in that** the roller body (16) is constructed in one piece and without weld seams and is produced from an aluminium which can be continuously cast or an aluminium alloy which can be continuously cast by means of extrusion.

2. The roller according to claim 1, **characterized in that** the roller body (16) has at least one radially outwardly profiled shaping (20).

3. The roller according to claim 1 or claim 2, **characterized in that** the roller body (16) has at least one radially inward reinforcement (22) which in particular is constructed along the axis of rotation (18).

4. The roller according to one of the preceding claims, **characterized in that** the profiled shaping (20) and/or reinforcement (22) is constructed in one piece and without weld seams on the roller body (16), and/or, at least in part, is releasably connected to the roller body (16).

5. The roller according to one of the preceding claims, **characterized in that** the reinforcement (22) is respectively constructed in the form of a strut and/or a profile, in particular a T-profile.

6. The roller according to one of the preceding claims, **characterized in that** a disk plate (24) for rotatably mounting the roller (10) is provided at each end of the roller body (16).

7. The roller according to one of the preceding claims, **characterized in that** a flange (26) with a bearing journal (28) and/or a bearing shaft for rotatably mounting the roller (10) is disposed on each of the disk plates (24).

8. The roller according to one of the preceding claims, **characterized in that** at least one core element for reinforcing the roller body (16) is disposed inside the roller body (16).

9. The roller according to one of the preceding claims, **characterized in that** the profiled shaping (20) and/or the reinforcement (22) are produced by means of extrusion moulding.

10. The roller according to one of the preceding claims, **characterized in that** the profiled shaping (20) and/or the reinforcement (22) are produced from a metal that can be continuously cast, for example aluminium or an aluminium alloy.

11. An agricultural working machine, in particular a roll baler (10), with at least one roller (12) according to one of the preceding claims.

## Revendications

1. Rouleau pour une machine de travail agricole, en particulier une presse à balles (10), comprenant un corps de rouleau de conformation sensiblement cylindrique (16) qui peut être monté dans un carter (30) de manière rotative autour d'un axe de rotation (18), **caractérisé en ce que** le corps de rouleau (16) est conçu d'un seul tenant et sans soudure et est réalisé par extrusion en aluminium coulable en continu ou en alliage d'aluminium coulable en continu.

2. Rouleau selon la revendication 1, **caractérisé en ce que** le corps de rouleau (16) comporte au moins un profilage (20) orienté radialement vers l'extérieur.

3. Rouleau selon la revendication 1 ou 2, **caractérisé en ce que** le corps de rouleau (16) comporte radialement côté intérieur au moins un renfort (22) qui est réalisé en particulier le long de l'axe de rotation (18).

4. Rouleau selon une des revendications précédentes, **caractérisé en ce que** le profilage (20) et/ou le renfort (22) sont conçus d'un seul tenant, en particulier sans soudure, sur le corps de rouleau (16) et/ou sont reliés, au moins en partie, de façon amovible au corps de rouleau (16).

5. Rouleau selon une des revendications précédentes, **caractérisé en ce que** le renfort (22) est conçu respectivement sous la forme d'un contrefort et/ou d'un profil, en particulier d'un profil en T.

6. Rouleau selon une des revendications précédentes, **caractérisé en ce qu'**aux extrémités du corps de rouleau (16) est prévu respectivement un disque (24) pour le montage en rotation du rouleau (10).

7. Rouleau selon une des revendications précédentes, **caractérisé en ce que** sur les disques (24) est disposée respectivement une bride (26) avec un tourillon (28) et/ou un arbre d'appui pour le montage en rotation du rouleau (10).

8. Rouleau selon une des revendications précédentes, **caractérisé en ce qu'**à l'intérieur du corps de rouleau (16) est disposé au moins un élément de noyau pour renforcer le corps de rouleau (16).

9. Rouleau selon une des revendications précédentes, **caractérisé en ce que** le profilage (20) et/ou le renfort (22) sont réalisés par extrusion.

10. Rouleau selon une des revendications précédentes, **caractérisé en ce que** le profilage (20) et/ou le renfort (22) sont réalisés dans un métal coulable en continu, par exemple en aluminium ou en alliage d'aluminium.

11. Machine de travail agricole, en particulier presse à balles (10), comprenant au moins un rouleau (12) conçu selon une des revendications précédentes.
